# FASCICULE DE BREVET EUROPEEN

(11) **EP 0 734 131 B1**
(45) Date de publication et mention de la délivrance du brevet: **09.07.1997**
(21) Numéro de dépôt: 96400575.5
(22) Date de dépôt: 19.03.1996
(51) Int. Cl.: H04J 14/02

(54) **Procédé de gestion de boucle optique à multiplexage en longueur d'onde**
Verfahren zur Verwaltung eines optischen Ringes mit Wellenlängenmultiplex
Method for administrating an optical ring with wavelength multiplexing

(30) Priorité: 21.03.1995 FR 9503292
(43) Date de publication de la demande: 25.09.1996
(73) Titulaire: FRANCE TELECOM, 75015 Paris (FR)
(72) Inventeur: Chawki, Mouhammad Jamil, 94230 Cachan (FR); Le Gac, Ivan, 94230 Cachan (FR); Tholey, Valérie, 94230 Cachan (FR)
(74) Mandataire: Schmit, Christian Norbert Marie

(56) Documents cités:
- EP-A- 0 497 005
- ELECTRONICS LETTERS, vol. 30, no. 16, 4 Août 1994, page 1323/1324 XP000471831 THOLEY V ET AL: "DEMONSTRATION OF WDM SURVIVABLE UNIDIRECTIONAL RING NETWORK USING TUNABLE CHANNEL DROPPING RECEIVERS"
- ICC 1988 ; DIGITAL TECHNOLOGY - SPANNING THE UNIVERSE, PHILADELPHIA, JUNE 12 - 15, 1988, vol. VOL. 3 OF 3, no. 1988, INSTITUTE OF ELECTRICAL AND ELECTRONICS ENGINEERS, pages 1497-1501, XP000014843 KAVEHRAD M ET AL: "A HIGH-SPEED FLOODING OPTICAL LOCAL AREA NETWORK"
- PATENT ABSTRACTS OF JAPAN vol. 018, no. 084 (E-1506), 10 Février 1994 & JP-A-05 292110 (HITACHI LTD), 5 Novembre 1993,
- PATENT ABSTRACTS OF JAPAN vol. 013, no. 097 (E-723), 7 Mars 1989 & JP-A-63 272132 (NIPPON TELEGR & TELEPH CORP), 9 Novembre 1988,

## Description

L'invention concerne un procédé de gestion de boucle optique à multiplexage en longueur d'ondes encore dénommée boucle optique multicolore. Elle s'applique à tout type de réseau de télécommunication, à savoir aux réseaux de télécommunication publics ou privés. Ainsi, elle s'applique au réseau national et régional de télécommunication, aux réseaux locaux et aux réseaux téléinformatiques.

On entend par boucle optique, dans le domaine des télécommunications, un ensemble de stations reliées entre elles par une ou plusieurs fibres optiques constituant le moyen de transport d'informations d'une station à une autre. Ces stations forment des noeuds de trafic variable. On entend par boucle optique multicolore une boucle dans laquelle les informations sont transférées avec un multiplexage en longueur d'onde. Les informations sont transférées par le réseau de la station d'émission vers une autre station de la boucle, sur une longueur d'onde donnée du multiplex, affectée à cette station, chaque station ayant une longueur d'onde de réception prédéterminée.

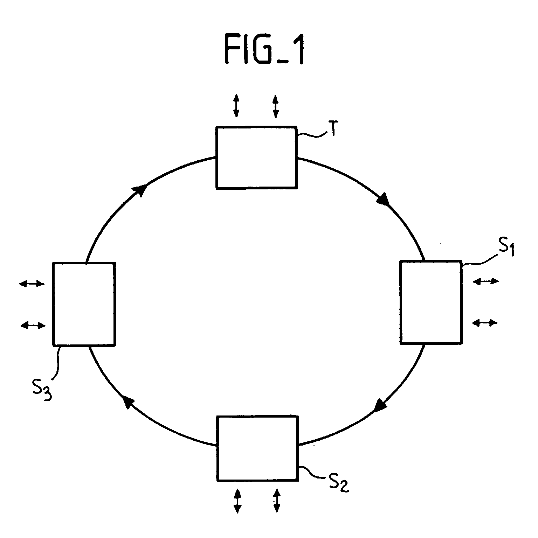

On peut citer à titre d'exemple de réseaux utilisant la transmission sur fibres optiques les réseaux répondant à la norme SDH (Synchronus Digital Hierarchy). Ces réseaux sont organisés en boucles pouvant se présenter sous deux types d'architecture : une architecture unidirectionnelle telle que schématisée sur la figure 1, ou une architecture bidirectionnelle.

La boucle unidirectionnelle (Fig. 1) comprend une station en "tête" de réseau (T), encore appelée station centrale, reliée à plusieurs stations secondaires (S) selon un sens bien défini. Chaque station secondaire peut extraire les informations qui lui sont destinées et insère d'autres informations qui seront transmises vers la tête du réseau. La fonction insertion/extraction est réalisée avec un multiplexeur à insertion/extraction connu sous l'abréviation MIE ou ADM dans la littérature anglo-saxonne (Add/Drop Multiplexing).

Dans cet exemple donné, le transfert des informations dans la boucle se fait, selon la hiérarchie de la norme SDH, à partir du multiplex fréquentiel optique au moyen d'une trame de données numériques STM4 ou STM16 en fonction du nombre de stations de la boucle. Ainsi, dès que le nombre de stations est supérieur à 4, la trame utilisée est une trame STM16 à 2,5 Gbit/s obtenue par un multiplexage électrique temporel de 16 trames STM1 à 155 Mbits/s. Une trame STM1 de la norme SDH comprend un champ de surdébit de gestion noté SOH, qui ne contribue pas au transport données mais qui est utilisé pour délimiter et gérer la trame. Ce champ SOH est lui-même divisé en deux champs : le MSOH constitue le surdébit pour les sections de multiplexage et le RSOH constitue le surdébit pour les sections de régénération.

Pour la réalisation du multiplexage en longueur d'ondes, connu sous l'abréviation anglo-saxonne WDM (Wavelenght-Division-Multiplexing), on utilise des multiplexeurs à insertion/extraction fréquentiel-optiques, notés MIE-FO, à base de filtres acousto-optiques ou Fabry-Pérot ainsi que des guides en optique intégrée.

Actuellement, le type d'architecture de réseau multicolore organisé en boucle optique unidirectionnelle, requiert un protocole de gestion centralisé dans la station en tête de réseau.

Ce protocole de gestion doit permettre de configurer les stations de la boucle et de les reconfigurer à tout instant si besoin est.

Selon l'article intitulé "Wavenlength Division Multiple-Access Network-Based on Centralized Common-Wavelenght Control" de M.W Maeda et Al, publié dans IEE Photonics Technology Letters, Vol.5, N° 1, pp 83-85, Janvier 1993, il est recommandé d'utiliser, pour le protocole de gestion de réseau, une longueur d'onde spécifique c'est-à-dire un canal fréquentiel optique spécifique et une porteuse haute fréquence.

L'inconvénient lié au fait que l'on utilise un canal fréquentiel optique spécifique ( une longueur d'onde déterminée ) pour transmettre les informations de gestion aux stations secondaires, réside dans le fait que chaque station secondaire doit comporter un filtre optique supplémentaire, pour recevoir les informations de gestion arrivant sur ce canal spécifique, ainsi que l'électronique rapide associée à ce filtre.

La présente invention propose un procédé de gestion adapté à une boucle optique multicolore unidirectionnelle ne présentant pas les inconvénients cités ci dessus. De plus le procédé permet de reconfigurer les multiplexeurs MIE-FO de chaque station.

Dans ce procédé, la station centrale gère la boucle, et chaque station secondaire gère localement les informations qu'elle reçoit de la station centrale pour reconfigurer son multiplexeur MIE-FO.

Le protocole de gestion selon l'invention est indépendant du mode de transmission des données et de leur débit. Il est adapté tout aussi bien à la transmission synchrone qu'à une transmission plésiochrone de même qu'il est indépendant de la forme sous laquelle sont transmises les données numériques.

L'invention a plus particulièrement pour objet un procédé de gestion d'un réseau organisé en boucle optique unidirectionnelle, à multiplexage fréquentiel optique, comprenant un ensemble de stations de trafic reliées entre-elles par une ou plusieurs fibres optiques formant la boucle, principalement caractérisé en ce que la station centrale donne l'ordre à une station secondaire, qu'elle désigne, d'accorder ses moyens de réception sur une longueur d'onde déterminée, à partir d'un message diffusé en permanence lors d'une configuration ou d'une reconfiguration à toutes les stations secondaires, sur tous les canaux du multiplex fréquentiel optique.

Selon un objet de l'invention, le message de configuration, diffusé à toutes les stations secondaires (S1 - Sn), comprend pour chaque canal d'émission de la station centrale :
- un premier mot d'identification de la longueur d'onde d'émission du laser d'émission de la station centrale (T),
- un deuxième mot d'identification de la station secondaire désignée (Si) à laquelle la station centrale envoie une information de gestion,
- un troisième mot contenant l'information de gestion permettant à la station secondaire (Si) de configurer son multiplexeur à insertion/extraction fréquentiel-optique, de manière à ce que ses moyens de réception soient accordés sur la longueur d'onde de réception déterminée (λj) par la station centrale.

D'autres particularités et avantages de l'invention apparaîtront à la lecture de la description faite à titre d'exemple illustratif et non limitatif, en référence aux figures annexées qui représentent :
- la figure 1, un schéma d'une boucle directionnelle,
- la figure 2, un organigramme d'un mode de fonctionnement d'un procédé selon l'invention,
- la figure 3, un schéma d'une boucle à multiplexage en longueur d'onde mettant en oeuvre le procédé selon l'invention dans le cas de la norme SDH.

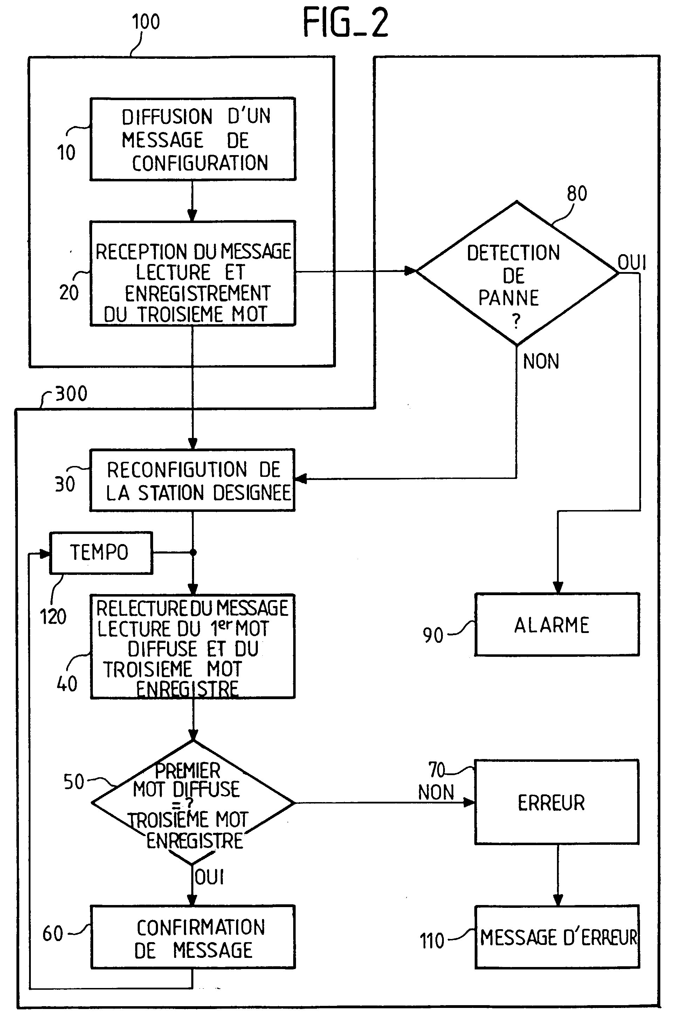

La figure 2 schématise les étapes d'un procédé de gestion selon l'invention.

De manière avantageuse, un tel procédé est divisé en deux parties selon le sens des informations à transmettre, c'est-à-dire selon que les informations sont transmises de la station centrale T vers les stations secondaires S (partie 100) ou bien d'une station secondaire vers la station centrale (partie 300).

Chaque station secondaire possède de préférence des moyens de réception accordables selon la densité du trafic. Or, avant toute activation du réseau, la station centrale T ne connaît pas, a priori, la longueur d'onde de réception des stations secondaires. C'est pourquoi, pour pouvoir donner l'ordre à une station secondaire particulière de se configurer, c'est-à-dire d'accorder ses moyens de réception sur une longueur d'onde précise, la station centrale T diffuse un message de configuration à toutes les stations secondaires, sur tous les canaux du multiplex fréquentiel optique.

De manière avantageuse, ce message est diffusé en permanence jusqu'à ce que la station centrale T reçoive une information de la station secondaire qu'elle a désignée dans son message.

Le message diffusé par la station centrale T aux stations secondaires S comprend, pour chaque canal, trois mots. Le premier mot est diffusé en permanence et permet d'identifier la longueur d'onde d'émission du laser, correspondant au canal considéré, de la station centrale. Ainsi, à chaque canal de transmission c'est-à-dire pour chaque laser d'émission de la station centrale, correspond un code. Ce code est de préférence écrit sous forme binaire. Le code 1 correspond par exemple à la longueur d'onde d'émission λ1, le code 2 à la longueur d'onde λ2, et ainsi de suite.

Le deuxième mot permet d'identifier la station secondaire désignée à laquelle la station T désire envoyer l'information de gestion c'est-à-dire l'ordre de configuration.

Enfin, le troisième mot contient l'information de gestion proprement dite. Il permet ainsi à la station secondaire désignée de configurer son multiplexeur à insertion/extraction fréquentiel-optique, de manière à ce que les moyens de réception soient accordés sur une longueur d'onde particulière donnée par la station centrale T. A chaque information de gestion correspond un code qui est de préférence binaire. Ainsi le code 1 correspond par exemple à la longueur d'onde donnée λ1, le numéro de code 2 à λ2, et ainsi de suite.

Les deux premières étapes 10 et 20 de l'organigramme de la figure 2 correspondent à ce qui vient d'être décrit c'est-à-dire à la diffusion d'un message de la station T vers toutes les stations secondaires S.

Seule la station secondaire désignée lit et enregistre le message de configuration, après avoir reconnu le deuxième mot la désignant. En pratique, la station enregistre le troisième mot c'est-à-dire uniquement le code de reconfiguration ou de configuration.

De façon pratique la station reçoit le premier mot qui est diffusé en permanence et relit le troisième mot qui a été enregistré.

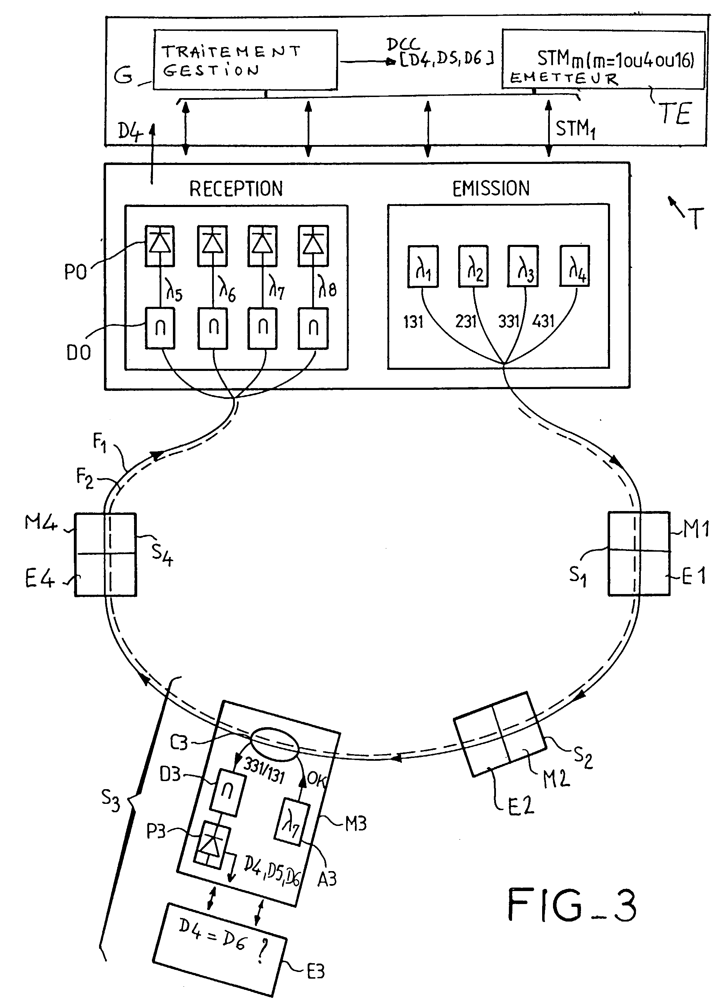

Une fois que ce troisième mot est lu et enregistré, la gestion de l'information est locale, c'est-à-dire qu'elle est uniquement effectuée à l'aide d'une électronique connue de traitement associée au Multiplexeur à insertion/extraction fréquentiel optique de la station désignée (cf. figure 3). Cette électronique de traitement permet ainsi à la station secondaire désignée de reconfigurer son multiplexeur à partir des codes reçus et enregistrés, de manière à accorder les moyens de réception sur une longueur d'onde déterminée.

Après avoir reconfiguré son multiplexeur MIE-FO, la station secondaire, désignée dans le message de configuration, effectue une relecture de ce message : c'est l'étape 40.

A l'étape 50, la station secondaire effectue une comparaison, au moyen de son électronique de traitement, portant sur le premier et sur le troisième mot. En effet, si l'opération de reconfiguration a été réalisée avec succès, la station secondaire doit lire, lors de l'étape de relecture, un message dans lequel le premier mot est identique au troisième, c'est-à-dire le message de configuration émis sur un canal dont la longueur d'onde d'émission d'un laser de la station T est identique à la longueur d'onde de réception de la station secondaire.

Par conséquent, si le résultat de la comparaison révèle que le premier mot est identique au troisième mot (étape 60), la station secondaire reconfigurée émet un message, comportant une information de confirmation de message, vers la station centrale T. Ainsi, la station T sait que l'opération de reconfiguration a été effectuée avec succès et qu'elle peut, de ce fait, arrêter la diffusion du message de configuration.

En revanche, si le résultat de la comparaison révèle une différence entre le premier et le troisième mot, étape 70, la station secondaire émet un message d'erreur vers la station centrale T, étape 110.

Dans ce cas, la station T arrête de préférence la diffusion du message et se charge de corriger l'erreur et/ou d'envoyer un nouveau message. Cependant elle peut aussi continuer à diffuser le message tant que l'opération de reconfiguration n'est pas effectuée avec succès.

On prévoit également selon un autre aspect du procédé de l'invention que chaque station réalise un test de façon cyclique pour contrôler que la longueur d'onde de son MIE-FO est bien celle sur laquelle il doit être calé. Ce test permet entre-autre de vérifier qu'il n'y pas eu une dérive du laser ou du MIE-FO.

Pour cela la station secondaire refait la comparaison entre le premier mot diffusé et reçu et le troisième mot enregistré lors d'une configuration. S'il y a eu dérive, ces mots ne coïncident pas car la station recevra sur une autre longueur d'onde, λ2 au lieu de λ1 par exemple.

En prévoyant une temporisation 120 pour que le test ne se fasse qu'à une fréquence désirée, la station locale peut au moyen de la boucle de test représentée sur la figure 2 vérifier le code de la longueur d'onde de réception et celui de la longueur d'onde sur laquelle elle reçoit.

En outre, selon une variante, l'électronique de traitement de la station secondaire, désignée dans le message de configuration, comporte un moyen de test qui permet de détecter une panne éventuelle (étape 80) d'un élément du multiplexeur tel qu'un filtre optique, un laser ou un récepteur par exemple.

Si ce moyen de test détecte une panne, alors la station secondaire émet un message d'alarme, étape 90, vers la station T. En revanche, si aucune panne n'est détectée, l'étape suivante du procédé est réalisée.

Sur l'organigramme, ce moyen de test est activé lors de l'étape 20 de réception du message par la station secondaire désignée. Cependant, il peut être activé à d'autres moments dans les étapes du procédé, comme par exemple avant toute diffusion du message de configuration par la station T.

La boucle optique multicolore, représentée sur la figure 3, illustre un exemple de mise en oeuvre du procédé dans le cas de la norme SDH. Elle est constituée d'une station centrale T et de plusieurs stations secondaires S. Dans l'exemple, les stations secondaires sont au nombre de 4 (S1,S2,S3,S4). Les stations secondaires S1-S4 comprennent chacune un multiplexeur à insertion/extraction fréquentiel-optique M1, M2, M3, M4.

La station centrale T est formée de plusieurs lasers 1, 2, 3, 4 émettant à des longueurs d'ondes différentes λ1, λ2, λ3, λ4.

Les informations à diffuser, sont selon un exemple sous forme de trames STM1 ou STM4 ou STM16 de la norme SDH obtenues à partir d'un émetteur TE (SDH). Ces informations sont diffusées vers les autres stations S1-S4 qui filtreront chacune de ces longueurs d'ondes.

Le multiplexeur M3 de la station secondaire S3 est formé d'un coupleur optique 2x2 C3 placé sur les fibres F1, F2, d'un laser A3 pour insérer les informations dans la trame reçue et d'un filtre optique D3, de type Fabry-Perot, accordable suivi d'un récepteur P3 pour extraire le débit destiné à la station. Le filtre D3 est relié à une branche du coupleur C3 tandis que le laser A3 est relié à l'autre branche.

Les multiplexeurs des autres stations M1, M2, M4 sont identiques. Chaque station secondaire comporte également des moyens électroniques de traitement E1-E4 tout à fait classiques, servant à commander le laser d'émission, le filtre de réception, et à gérer les signaux reçus.

Les lasers des différentes stations émettent à des longueurs d'ondes qui peuvent être distinctes les unes des autres.

La tête de réseau T comporte également des moyens de réception comportant autant de filtres optiques d'extraction DO que de stations émettrices placées sur la boucle, et autant de détecteurs PO que de filtre DO. Tout comme les filtres optiques des stations secondaires, les filtres Do de la station centrale T sont accordables.

La tête de réseau T comporte en outre des moyens de traitement et de gestion des signaux reçus et émis G classiques, aptes à mettre en oeuvre le procédé.

De manière avantageuse, la longueur d'onde d'émission de chaque station secondaire est différente de la longueur d'onde de réception.

Dans la description qui va suivre on décrit l'application du procédé au cas d'une transmission synchrone sous forme de trames selon la norme SDH.

Bien entendu comme cela a déjà été précisé, le procédé s'applique à d'autre type transmission. On peut prévoir selon le procédé, que les informations de gestion soient transmises par porteuse haute ou basse fréquence. Les stations réceptrices devront posséder alors outre leur filtre optique, un filtre électrique pour récupérer ces informations. Un filtre électrique est loin d'être aussi complexe et aussi cher qu'un filtre optique.

Dans le cas de l'application du procédé à la norme de transmission SDH, les informations de gestion vont être transmises avec les données de la trame SDH. Dans ce cas, comme il a été décrit précédemment, c'est le champ MSOH de surdébit pour les sections de multiplexage qui est utilisé pour la gestion des informations et c'est le canal DCC de communication de données (Data Communication Channel) de la trame dans laquelle on utilise le champ MSOH qui va être utilisé pour transporter les informations de gestion. Le message, diffusé par la station centrale à toutes les stations secondaires, est codé sur différents octets du DCC. De préférence, chaque mot du message est codé sur un seul octet.

Selon un exemple, l'octet D4 comporte le premier mot, c'est-à-dire l'identification de la longueur d'onde des lasers d'émission, le cinquième octet D5 du DCC comporte le deuxième mot, c'est-à-dire le numéro de la station secondaire, et le sixième octet D6 comporte le troisième mot, c'est-à-dire le message. Ainsi, un message comportant par exemple le code 2 dans le cinquième octet D5 et le code 3 dans le sixième octet D6 signifie que la station S2 doit configurer son MIE-FO de manière à ce que ses moyens de réception soient accordés sur la longueur d'onde λ3, dans le cas où le code du deuxième mot correspond à la station S2 et le code 3 du troisième mot correspond à la longueur d'onde λ3. Bien sûr, il existe beaucoup d'autres possibilités puisque le MSOH comprenant 45 octets, il est possible de coder les mots du message sur d'autres octets.

Dans l'exemple illustré sur la figure 3, la station T désigne la station S3 pour qu'elle reconfigure son MIE-FO de manière à accorder ses moyens de réception sur la longueur d'onde λ1. Aux deuxième et troisième mots correspondent alors respectivement les codes 3 et 1. Pour chaque canal 1 à 4, les lasers de la station T émettent donc respectivement les messages codés 131 231 331 et 431. Si son multiplexeur est configuré pour recevoir la longueur d'onde λ3 par exemple, la station S3 ne reçoit que le message codé 331. Après avoir reconnu le code 3 correspondant à la station S3, dans le deuxième mot, la station S3 lit et enregistre le message codé 331.

L'électronique de traitement E3 permet alors à la station S3 de reconfigurer son multiplexeur de manière à accorder ses moyens de réception sur la longueur d'onde λ1.

Après avoir lu et enregistré une première fois le message codé 331 et reconfiguré son multiplexeur, la station S3 effectue une relecture du message. A la relecture du message, les moyens de réception étant alors accordés sur λ1, la station S3 doit lire le message codé 131, c'est-à-dire le message de configuration émis par le laser d'émission de longueur d'onde λ1 dans le canal 1.

Si le message lu est effectivement 131 alors la comparaison des premier et troisième mots indique qu'ils sont identiques et la station S3 émet vers la station T une information de confirmation de message.

Inversement, si le message lu est 231, par exemple, alors cela signifie que l'opération de reconfiguration n'a pas été concluante et la station S3 émet un message d'erreur vers la station T.

Ainsi, selon l'exemple de la norme SDH, l'octet D4 contient respectivement les codes 1, 2, 3 et 4, l'octet D5 contient le code 3 et l'octet D6 contient le code 1. L'électronique de traitement E3 compare D4 à D6.

## Revendications

1. Procédé de gestion d'un réseau organisé en boucle optique unidirectionnelle, à multiplexage fréquentiel optique, comprenant un ensemble de stations de trafic (T,S) reliées entre-elles par une ou plusieurs fibres optiques formant la boucle, les informations étant transférées dans le réseau, caractérisé en ce que la station centrale (T) donne l'ordre à une station secondaire (Si), qu'elle désigne, d'accorder ses moyens de réception sur une longueur d'onde déterminée (λj), à partir d'un message diffusé en permanence lors d'une configuration ou d'une reconfiguration à toutes les stations secondaires (S1-Sn) sur tous les canaux du multiplex fréquentiel optique.

2. Procédé selon la revendication 1, caractérisé en ce que le message de configuration, diffusé à toutes les stations secondaires (S1 - Sn), comprend pour chaque canal d'émission de la station centrale :
- un premier mot d'identification de la longueur d'onde d'émission du laser d'émission de la station centrale (T),
- un deuxième mot d'identification de la station secondaire désignée (Si) à laquelle la station centrale envoie une information de gestion,
- un troisième mot contenant l'information de gestion permettant à la station secondaire (Si) de configurer son multiplexeur à insertion/extraction fréquentiel-optique, de manière à ce que ses moyens de réception soient accordés sur la longueur d'onde de réception déterminée (λj) par la station centrale.

3. Procédé selon l'une des revendications 1 à 2, caractérisé en ce que la station secondaire désignée (Si) ayant lu et enregistré l'information de configuration contenue dans le message lit et compare le premier mot et le troisième mot du message.

4. Procédé selon l'une quelconque des revendications 1 à 3, caractérisé en ce que le résultat de la comparaison révélant que les premier et troisième mots du message sont identiques, la station secondaire désignée (Si) émet un message, comportant un mot d'information de confirmation de message, vers la station centrale (T).

5. Procédé selon l'une quelconque des revendications 1 à 3, caractérisé en ce que le résultat de la comparaison révélant que les premier et troisième mots du message sont différents, la station secondaire désignée (Si) émet un message, comportant un mot d'indication d'erreur, vers la station centrale (T).

6. Procédé selon l'une quelconque des revendications 1 à 5, caractérisé en ce qu'une panne d'un élément de la station secondaire désignée (Si) est signalée à la station centrale (T) à partir d'un message comportant un mot d'alarme.

7. Procédé selon l'une quelconque des revendications 1 à 6, caractérisé en ce dans le cas où les trames sont de type répondant à la norme SDH, la gestion des informations est réalisée au moyen du canal DCC de communication de données de la trame dans laquelle on utilise un champ MSOH de surdébit de gestion des sections de multiplexage pour transmettre le message de configuration.

8. Procédé selon la revendication 7, caractérisé en ce que chaque mot du message occupe respectivement un octet du champ MSOH du canal DCC d'une trame de transmission selon la norme SDH.

9. Procédé selon l'une quelconque des revendications 1 à 7, caractérisé en ce que les informations de gestions sont transmises par une fréquence porteuse dans les canaux fréquentiels optiques.

10. Procédé selon l'une quelconque des revendications précédentes, caractérisé en ce que le premier mot du message est diffusé en permanence.

11. Procédé selon l'une quelconque des revendications précédentes, caractérisé en ce que chaque station secondaire réalise un test de vérification permettant de déceler une dérive du laser ou du filtre optique.

## Patentansprüche

1. Verfahren zur Verwaltung eines als unidirektioneller optischer Ring organisierten Netzwerks mit optischem Frequenzmultiplexing, eine Gruppe Verkehrsstationen (T,S) umfassend, miteinander verbunden durch eine oder mehrere den Ring bildende optische Fasern, wobei die Informationen bzw. Daten in dem Netzwerk übertragen werden,
**dadurch gekennzeichnet**,
daß die Zentralstation (T) einer Sekundärstation (Si), die sie bestimmt bzw. bezeichnet, den Auftrag erteilt, ihre Empfangseinrichtungen auf eine bestimmte Wellenlänge (λj) einzustellen, ab einer Nachricht, die zur Zeit einer Konfiguration oder einer Rekonfiguration permanent über alle optischen Frequenzmultiplexkanäle an alle Sekundärstationen (S1-Sn) gesendet wird.

2. Verfahren nach Anspruch 1, dadurch gekennzeichnet, daß die an alle Sekundärstationen (S1-Sn) gesendete Konfigurationsnachricht für jeden Sendekanal der Zentralstation umfaßt:
- ein ersten Wort zur Identifikation der Emissionswellenlänge des Emissionslasers der Zentralstation (T),
- ein zweites Wort zur Identifikation der bezeichneten Sekundärstation (Si), der die Zentralstation eine Verwaltungsinformation sendet,
- ein drittes Wort, das die Verwaltungsinformation enthält, die der Sekundärstation (Si) ermöglicht, ihren optischen Frequenz-Eingabe-/Ausgabemultiplexer so zu konfigurieren, daß seine Empfangseinrichtungen auf die durch die Zentralstation bestimmte Empfangswellenlänge (λj) eingestellt sind.

3. Verfahren nach einem der Ansprüche 1 bis 2, dadurch gekennzeichnet, daß die bezeichnete Sekundärstation (Si), nachdem sie die in der Nachricht enthaltene Konfigurationsinformation gelesen und abgespeichert hat, das erste Wort und das dritte Wort der Nachricht liest und vergleicht.

4. Verfahren nach einem der Ansprüche 1 bis 3, dadurch gekennzeichnet, daß, wenn das Resultat des Vergleichs zeigt, daß das erste und das dritte Wort der Nachricht identisch sind, die bezeichnete Sekundärstation (Si) der Zentralstation (T) eine Nachricht sendet, die ein Nachrichtbestätigungs-Informationswort enthält.

5. Verfahren nach einem der Ansprüche 1 bis 3, dadurch gekennzeichnet, daß, wenn das Resultat des Vergleichs zeigt, daß das erste und das dritte Wort unterschiedlich sind, die bezeichnete Sekundärstation (Si) an die Zentralstation (T) eine Nachricht sendet, die ein Fehleranzeigewort umfaßt.

6. Verfahren nach einem der Ansprüche 1 bis 5, dadurch gekennzeichnet, daß ein Versagen eines Elements der bezeichneten Sekundärstation (Si) der Zentralstation (T) signalisiert wird mittels einer ein Alarmwort umfassenden Nachricht.

7. Verfahren nach einem der Ansprüche 1 bis 6, dadurch gekennzeichnet, daß im Falle von Rastern, die der SDH-Norm entsprechen, die Verwaltung der Informationen mit Hilfe des DCC-Kommunikationskanals von Daten des Rasters erfolgt, in dem man ein MSOH-Verwaltungs-Überkapazitätsfeld der Multiplexingsektionen bzw. -segmente benutzt, um die Konfigurationsnachricht zu übertragen.

8. Verfahren nach Anspruch 7, dadurch gekennzeichnet, daß jedes Wort der Nachricht jeweils ein Byte des MSOH-Felds des DCC-Kanals eines Übertragungsrasters nach der SDH-Norm belegt.

9. Verfahren nach einem der Ansprüche 1 bis 7, dadurch gekennzeichnet, daß die Verwaltungsinformationen in den optischen Frequenzkanälen durch eine Trägerfrequenz übertragen werden.

10. Verfahren nach einem der vorangehenden Ansprüche, dadurch gekennzeichnet,daß das erste Wort der Nachricht permanent übertragen wird.

11. Verfahren nach einem der vorangehenden Ansprüche, dadurch gekennzeichnet, daß jede Sekundärstation einen Kontrollversuch durchführt, der ermöglicht, eine Abweichung des Lasers oder des optischen Filters festzustellen.

## Claims

1. A method of managing a network organised in a uni-directional optical loop and based on optical frequency division multiplexing, comprising a series of traffic stations (T, S) linked to one another by one or more optical fibres forming the loop, the data being transferred within the network, characterised in that, for the purposes of configuration or re-configuration, the central station (T) issues a command to a secondary station (Si), which it designates, to tune its receiving means to a given wave length (λj), on the basis of a message continuously broadcast to all the secondary stations (S1-Sn) on all the optical frequency division multiplexing channels.

2. A method as claimed in claim 1, characterised in that the configuration message broadcast to all the secondary stations (S1-Sn) comprises for each transmission channel of the central station :
- a first word identifying the transmission wave length of the transmission laser of the central station (T),
- a second word identifying the designated secondary station (Si) to which the central station is sending management information,
- a third word containing the management information enabling the secondary station (Si) to configure its add/drop optical frequency multiplexer in such a way that its receiving means will be tuned to the receiving wave length (λj) determined by the central station.

3. A method as claimed in one of claims 1 to 2, characterised in that when it has read and recorded the configuration information contained in the message, the designated secondary station (Si) reads and compares the first word and the third word of the message.

4. A method as claimed in any one of claims 1 to 3, characterised in that the if result of the comparison is that the first and third words of the message are identical, the designated secondary station (Si) transmits to the central station (T) a message containing a word to notify confirmation of the message.

5. A method as claimed in any one of claims 1 to 3, characterised in that if the result of the comparison is that the first and third words of the message are different, the designated secondary station (Si) transmits to the central station (T) a message containing a word indicating an error.

6. A method as claimed in any one of claims 1 to 5, characterised in that any failure by an element in the designated secondary station (Si) is indicated to the central station (T) by means of a message containing an alarm word.

7. A method as claimed in any one of claims 1 to 6, characterised in that if the frames are of the type complying with the SDH standard, the data is handled by means of the DCC data communication channel of the frame, in which a multiplex section overhead MSOH field is used to transmit the configuration message.

8. A method as claimed in claim 7, characterised in that each word of the message occupies respectively one octet of the MSOH field of the DCC channel of the transmission frame as specified by the SDH standard.

9. A method as claimed in any one of claims 1 to 7, characterised in that the management data are transmitted by a carrier frequency in the optical frequency channels.

10. A method as claimed in any one of the preceding claims, characterised in that the first word of the message is broadcast on a continuous basis.

11. A method as claimed in any one of the preceding claims, characterised in that each secondary station performs a verification test enabling any drift by the laser or optical fibre to be detected.13 December 1996
